# EUROPEAN PATENT APPLICATION

(11) **EP 1 241 666 A2**
(43) Date of publication of application: **18.09.2002**
(21) Application number: 01121653.8
(22) Date of filing: 13.09.2001
(51) Int. Cl.: G11B 19/12

(54) **Information recording/reproducing apparatus**

(30) Priority: 16.03.2001 JP 2001075972
(71) Applicant: Kabushiki Kaisha Toshiba, Tokyo (JP)
(72) Inventor: Fujita, Kazuya, Minato-ku, Tokyo 105-8001 (JP)
(74) Representative: HOFFMANN - EITLE

(57) **Abstract**

There is provided a safeguard function to inhibit the information recording on an optical disc which is not contained in a cartridge. This aims at improvement in reliability. Disc detector (401) discriminates whether the disc loaded at tray (101) is a bare disc or a cartridge type disc. When a bare disc is loaded, even if a recording instruction is given, system controller (402) inhibits a start of recording, and displays that fact on display unit (403). Or, in such case, system controller (402) enables a start of recording on another recordable disc.

## Description

This invention relates to an information recording/reproducing apparatus. As a recording/reproducing apparatus to which the present invention is applied, there is an apparatus for handling mediums such as a hard disk installed in the apparatus, a recordable/reproducible DVD (Digital Versatile Disc) which can be freely loaded to or ejected (or freely received or ejected) from the apparatus, and the like.

In recent years, a DVD standard is proposed wherein MPEG2 (Moving Picture Coding Expert Group) scheme, which is now an international standard in the image compression technology, and an AC3 audio compression scheme are adopted.

This DVD standard supports the MPEG2 scheme for a moving picture compression method according to the system layer of MPEG2, and also supports the AC3 audio compression scheme as well as the MPEG audio compression scheme for an audio compression method. Further, this DVD standard can handle subpicture data, obtained by run-length compressing bitmap data, for subtitles such as the subtitles of a movie or karaoke. Furthermore, in this DVD standard, control data (Navigation pack) is additionally adapted so that a special reproduction such as a fast-forward or reverse reproduction etc. can be performed. Furthermore, in this DVD standard, the standard of IS09660 and Micro UDF is supported so that the data of a disc can be read by a computer.

Moreover, as an own standard of media, subsequent to the standard of DVD-ROM which is the media of DVD-video, the standard of DVD-RAM (storage capacity of about 4.7GB) is also completed, and DVD-RAM drives are beginning to spread as computer peripherals.

Now, the standard of RTR (Real Time Recording)-DVD, i.e., the DVD video standard for realizing a real-time information recording/reproducing system, is completed. This RTR-DVD standard is prepared based on the standard of the DVD-video now released. Furthermore, a file system being compatible with the RTR-DVD is also standardized now.

On the other hand, a broadcasting signal recording/reproducing scheme using a hard disk drive (HDD) built in a recording/reproducing apparatus is proposed. A recent hard disk drive can record more than 20G-100G bytes of data.

With a progress of the image compression technology as mentioned above, a recording/reproducing apparatus for real-time recording a broadcasting signal or the like has been developed, wherein information storing media (DVD, hard disk, semiconductor memory, etc.) are effectively utilized.

By the way, various types of discs are developed as information recordable/reproducible optical discs. For example, there are two types each adopting the same recording format: one is a cartridge-contained type which is dealt with a cartridge, and the other is a cartridge-less type which is dealt with a disc itself without a cartridge.

For a cartridge-less type disc, it cannot be avoided that a user's hand may touch the disc. When the disc is dealt with in such an environment, a scratch will be attached on the surface of the disc, or dirt will adhere. If signal recording is made on such a disc, information of the scratch and/or dirt will be superimposed on information of the signal being recorded. Then, the recording device judges the portion of a dirt as a defective area, so that no information recording will be made on this portion, to thereby reduce the storage capacity of the disc.

Consequently, the above causes to provide a low quality of recorded information, to provide a low recording performance of the recording apparatus itself, and to reduce the reliability thereof.

It is accordingly an object of the present invention to provide an information recording/reproducing apparatus whose reliability is totally improved by implementing a safeguard function for inhibiting information recording on a cartridge-less optical disc.

Another object of the present invention is to provide an information recording/reproducing apparatus in which the on/off of the safeguard function can be selected to obtain a flexibility.

To achieve the above object, an apparatus according to an embodiment of the present invention comprises a loading unit (such as a disc tray or the like) in which either of a bare disc or a disc contained in a cartridge can be installed as a recording medium; an apparatus main body configured to freely activate/inactivate (or freely receive/eject) the loading unit (tray); a recording medium type detecting unit for detecting whether the recording medium installed in the loading unit (tray) is the bare disc or the cartridge-contained disc when the loading unit (tray) is activated (inserted); a recording operation inhibiting unit for inhibiting a recording operation of the apparatus main body when the recording medium type detecting unit detects that the disc installed in the loading unit (tray) is the bare disc.

According to the above apparatus, it is possible to stop recording operation on a cartridge-less disc which could be subjected to scratch and/or dirt, to thereby improve the reliability of recording processing.

This summary of the invention does not necessarily describe all necessary features so that the invention may also be a sub-combination of these described features.

The invention can be more fully understood from the following detailed description when taken in conjunction with the accompanying drawings, in which:
FIG. 1A is a perspective view of a portion of a recording/reproducing apparatus according to an embodiment of the present invention;
FIG. 1B is another perspective view of the portion of the recording/reproducing apparatus;
FIG. 2 is a signal processing block configuration showing the material portion of the apparatus according to the embodiment of the present invention;
FIG. 3 is a block diagram showing another embodiment of the present invention;
FIG. 4 is a flow chart for explaining an example of operation of the apparatus shown in FIG. 3; and
FIG. 5 is a flow chart for explaining another example of operation of the apparatus shown in FIG. 3.

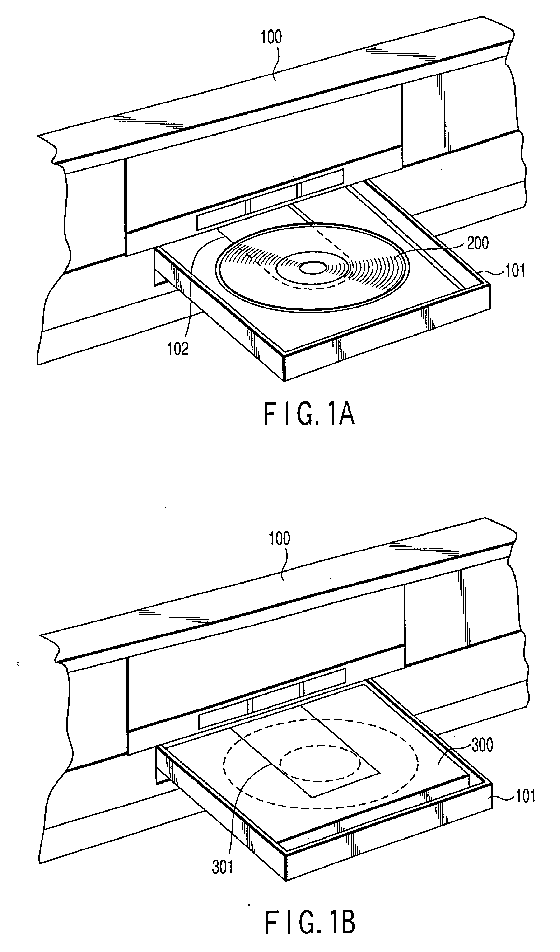

In the following, an embodiment of the present invention will be explained with reference to the accompanying drawings. In FIG. 1A, 100 denotes a main body of information recording/reproducing apparatus. An opening into which tray (or part of a disc loading mechanism) 101 is inserted horizontally or from which it can be ejected is provided in the front of main body 100 of the recording/reproducing apparatus. A disc loading portion for placing optical disc 200 is provided at the bottom of tray 101. A hollow having a shape being substantially matched with the disc shape is formed at the bottom of tray 101, so that optical disc 200 is rested at the disc loading portion. At the disc loading portion, cutting portion 102 is provided at the location corresponding to a place where an optical pickup head in recording/reproducing apparatus 100 moves. FIG. 1A is a perspective view showing that optical disc 200 is placed at the disc loading portion. As shown in FIG. 1B, information recording/reproducing apparatus 100 can also drive cartridge type medium 300.

This cartridge type medium 300 is an optical disc being built in a cartridge. Cartridge type medium 300 is carried on tray 101. When tray 101 is inserted inside of the main body of the apparatus, shutter 301 will slide in a given direction. The portion of the cartridge at which the shutter is located is cut out. The pickup head can irradiate an optical beam to the optical disc contained in the cartridge via the cut out portion.

Although not shown, the main body of the information recording/reproducing apparatus is provided with a mechanism for automatically loading the tray 101 when tray 101 is pushed with a certain degree toward the main body. There is also provided a mechanism for automatically unloading the tray 101 when an eject operation is done while tray 101 is located inside the main body of the recording/reproducing apparatus.

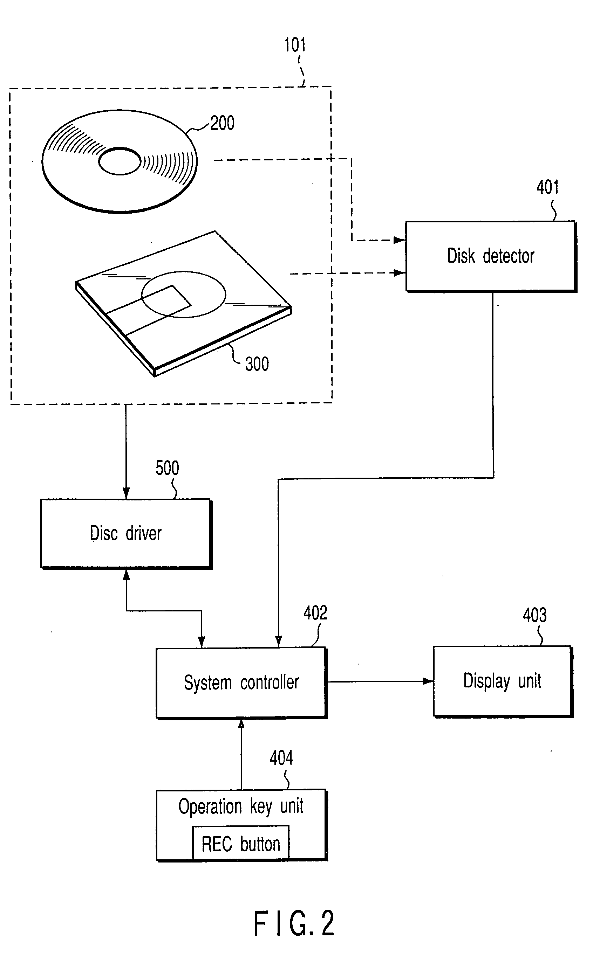

FIG. 2 shows a feature of the apparatus concerning implementation of this invention. This apparatus is provided with disc detector 401. Disc detector 401 detects whether the recording medium carried by tray 101 is a bare disc or a cartridge type, when tray 101 is loaded inside the apparatus. Various types can be applied to a disc detection sensor for disc detector 401.

For example, when tray 101 is inserted in the main body of the recording/reproducing apparatus, a leaf switch or the like (not shown) is used to mechanically detect the figure or shape of the cartridge (in this case, the leaf switch serves as a disc detecting sensor). Or, since an exterior of the cartridge is larger than that of the bare disc, the larger portion thereof can be optically detected using an optical sensor such as a photo-interrupter (not shown) (in this case, the optical sensor serves as the disc detecting sensor).

Moreover, the figure or shape of the cartridge can also be detected electrically. For example, a part of the cartridge is configured to face a pair of RF electrodes (not shown) when the cartridge is inserted in the main body of the apparatus. The capacitance between these RF electrodes changes from the case where a part of the cartridge just faces the electrode to the case where it does not face the electrode. With this capacitance change, it is possible to detect whether the cartridge is inserted in the main body of the apparatus (in this case, the RF electrodes serve as a disc detection sensor).

Disc detector 401 detects whether the bare disc or the cartridge type disc is carried by tray 101 when tray 101 has been inserted in the recording/reproducing apparatus or when tray 101 is currently loaded in the apparatus. Disc detector 401 supplies system controller 402 with the result of the detection.

Here, assume that the bare disc is placed on tray 101 and the result of detection indicating that is supplied from disc detector 401 to system controller 402. Next, further assume that an operation signal for instructing the recording is supplied from operation key unit 404 to system controller 402. In this case, system controller 402 inhibits the recording operation, without responding to a recording command. In other words, disc driver 500 is not driven in this case.

On the contrary, assume that the cartridge type disc is now carried by tray 101. In this case, further assume that an operation signal for instructing the recording is supplied from operation key unit 404 to system controller 402. Then, system controller 402 receives the recording command, and starts the recording operation. In this case, disc driver 500 is driven.

System controller 402 can supplies display unit 403 with a display signal. For example, when the recording operation is stopped like a previous example, the display signal for displaying the purport "unrecordable disc is loaded" can be given.

Incidentally, this invention is not limited to the above-mentioned embodiment. With the above-mentioned embodiment, it is assumed that display unit 403 displays a message meaning that an unrecordable disc is loaded and a recording operation is performed (or a recording command is given). This message may be an audio message.

Moreover, when the recording operation is performed (or when the recording command is given) while an unrecordable disc is loaded, the system may be configured to automatically generate a disc exchange request. More specifically, system controller 402 may output a trigger signal so that tray 101 is ejected from the main body of the apparatus and is kept in the ejected state. By so doing, the unrecordable disc may have to be unloaded.

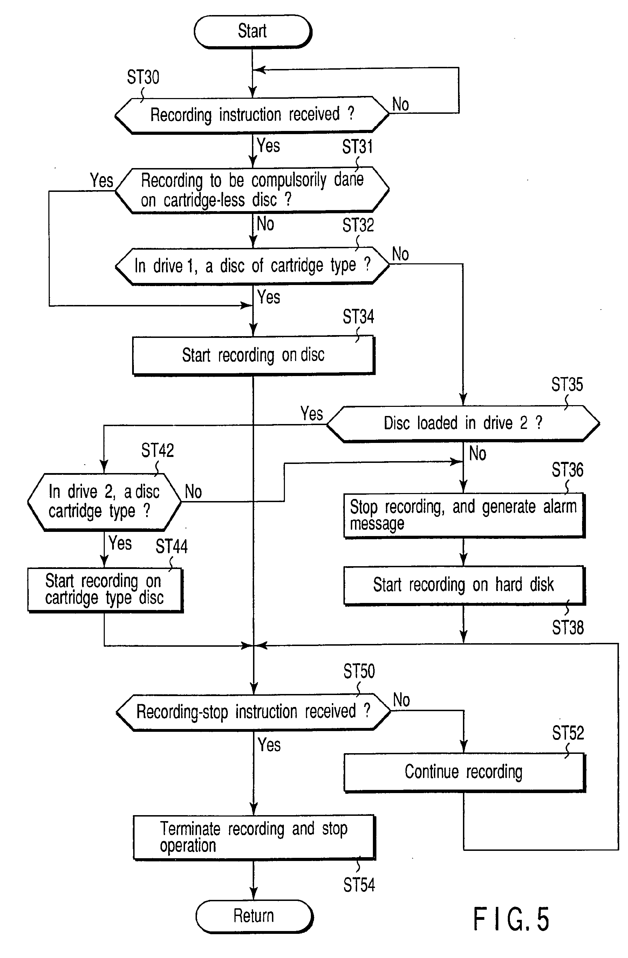

Furthermore, an embodiment of the invention may be provided with a release means (for example, step ST31 of FIG. 5) by which a safeguard function (function to permit the recording only on a cartridge type disc) can be canceled as mentioned above. This release means is effective if, for example, there is no preparation of a cartridge type disc when a program which is required to be recorded starts.

Moreover, when an unrecordable disc is loaded and a recording command is given, recording may be automatically started on the hard disk installed in the apparatus.

An information recording/reproducing apparatus according to an embodiment of the present invention may be an apparatus which is provided with an internal hard disk recorder and can deal with a removable recording medium such as a DVD-RAM, DVD-R, or the like. Further, this apparatus may deal with a removable reproducing medium such as a DVD-Video, DVD-Audio, or the like.

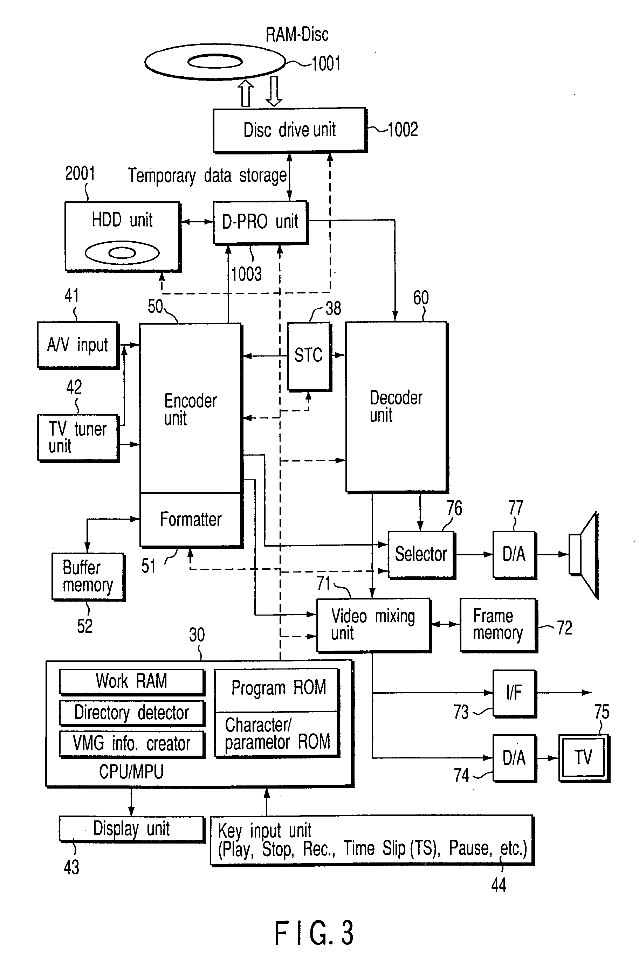

Hereafter, with reference to FIG. 3, an information recording/reproducing apparatus of this type will be explained. When the blocks in FIG. 3 are roughly divided, the left side includes a main portion of the recording block and the right side includes a main portion of the reproducing block.

This information recording/reproducing apparatus has hard disk drive unit 2001 and disc drive unit 1002 which carries out the rotation drive of optical disc 1001 and performs informational reading and writing. Optical disc 1001 is used as the first medium which is the information storage medium in which a video file can be created. Hard disk drive unit 2001 drives the hard disk as the second medium.

The data-processor unit 1003 can supply recording data to disc drive unit 1002 and to hard disk drive unit 2001, and it can receive a signal reproduced from them. Disc drive unit 1002 has a rotation control system, laser drive system, optical system, and so on, for optical disc 1001. Data-processor unit 1003 deals with data of a unit of recording or reproducing, and contains a buffer circuit, modulating/demodulating circuit, error correction section, etc.

This recording/reproducing apparatus is formed mainly by the constituting elements of encoder unit 50 constituting the recorder side, decoder unit 60 constituting the reproducer or player side, microcomputer block 30 for controlling the operation of the apparatus main body.

Encoder unit 50 has a video analog/digital converter for digitizing an input analog video signal, an audio analog/digital converter for digitizing an input analog audio signal, a video encoder, an audio encoder, and a subpicture encoder.

The output of encoder unit 50 is converted into a predetermined format (format of DVD-RAM) by formatter 51 containing buffer memory 52. In this way, the data being subjected to the format conversion is supplied to the data-processor unit 1003.

An external analog video signal and external analog audio signal from AV input unit 41, or an analog video signal and analog audio signal from TV tuner unit 42 are input to encoder unit 50.

Incidentally, encoder unit 50 can directly supply formatter 51 with a compressed digital video signal and/or digital audio signal, when a directly compressed digital video signal and/or digital audio signal are directly input. Encoder unit 50 can also directly supply video mixing unit 71 and audio selector 76 with the digital video signal and/or digital audio signal which have been subjected to the analog/digital conversion.

In the video encoder, a digital video signal is compressed by a variable bit rate based on MPEG2 or MPEG1 standard, and is converted into a digital video signal. Based on MPEG or AC-3 standard, a digital audio signal is compressed with a fixed bit rate, and is converted into a digital audio signal. Or, the digital audio signal is converted into a digital audio signal of a linear PCM.

When subpicture information (for example, subpicture signal from a DVD video player having an independent output terminal for the subpicture signal) is input from AV input unit 42, or when a DVD video signal having such a data configuration is broadcasted and is received by TV tuner unit 42, the subpicture signal in the DVD video signal is encoded by the subpicture encoder (run-length compression), so that it is changed to a bitmap of the subpicture.

The encoded digital video signal, digital audio signal, and subpicture data are packetized in formatter 51, and changed respectively to a video pack, audio pack, and subpicture pack. These packs are further gathered in formatter 51, and are converted into the format specified by the DVD recording standard (for example, the standard of DVD-RAM, DVD-R, DVD-RW or the like).

Here, the apparatus of FIG. 3 can supply hard disk drive unit 2001 (or disc drive unit 1002) with the information (packs of a video, audio, subpicture data, and the like) formatted by formatter 51 and the management information created thereby, through data processor 1003. The supplied information can be recorded on hard disk 2001 (or on optical disc 1001).

Moreover, the information recorded on hard disk 2001 (or on optical disc 1001) can also be recorded on optical disc 1001 (or hard disk 2001) through data-processor unit 1003 and disc drive unit 1002. This is because the data format of the information currently recorded on hard disk 2001 is the same as that recorded on optical disc 1001.

Moreover, it is possible to perform edit processing by which a part of the video object of two or more programs currently recorded on hard disk 2001 or on optical disc 1001 is deleted, or by which the objects of different programs are combined. This is because the data unit (will be described later) which is handled by the format according to an embodiment of the present invention is defined so that the editing is made easy.

Microcomputer block 30 contains an MPU (microprocessing unit) or CPU (central processing unit), a program ROM in which control programs or the like are written, a work RAM providing a work area required to execute a program, and an ROM in which data pieces such as display characters and display position parameters are written. As a part of the function to be realized by the program ROM of block 30, a directory detection section and management information (video manager VMG) creation section are contained.

That is, microcomputer block 30 has the information-processing section required to control the whole system. As elements constituting this information-processing section, there are a work RAM, directory detection section, VMG (video management information of the whole) information creation section, copy related information detection section, copy and scrambling information-processing section (RDI processing section), packet header processing section, sequence header processing section, aspect ratio information-processing section, and so on.

The MPU of microcomputer block 30 performs a defective place detection, non-recorded area detection, recording information recorded position setting, UDF recording, AV address setting, and so on, according to the control program stored in the program ROM, and using the work RAM as a work area.

Among those of the result of execution by the MPU, the contents to be notified to a user are displayed at display unit 43 of the DVD video recorder, or displayed at monitor display 75 using an OSD (on-screen display). Moreover, microcomputer block 30 has key input unit 44 which generates an operation signal for operating the apparatus. A play key, stop key, recording key, time slip key (operation key by which an already recorded portion is pursued to reproduce while the recording currently continues), pause key, etc. are provided at key input unit 44.

Incidentally, the timing at which microcomputer block 30 controls disc drive unit 1002, data-processor unit 1003, encoder unit 50 and/or decoder unit 60, etc. can be determined based on the time data obtained from system time clock (STC) 38. Operation of recording or reproducing is usually performed synchronizing with the time clock from STC 38. Other processing may be performed at timing being independent of STC 38.

Decoder unit 60 is equipped with a separator, memory, V (video) decoder, SP (subpicture) decoder, A (audio) decoder, and video processor. The above-mentioned separator has a function for separating and picking up respective packs from a signal of the DVD format having a packetized structure. The above-mentioned memory is used when pack-separating and other signal processing are executed. The above-mentioned V decoder has a function for decoding the main video data (contents of video packs) separated by the separator. The above-mentioned SP decoder has a function for decoding the subpicture data (contents of subpicture packs) separated by the separator. The above-mentioned A decoder has a function for decoding the audio data (contents of audio packs) separated by the separator. The above-mentioned video processor is equipped with a function for composing the decoded main image data with the decoded subpicture data and also with another function for superimposing a menu, highlight button, subtitle, or other subpicture image on the main image.

The output video signal from decoder unit 60 is input to video mixing unit 71. Composing or synthesizing of text data is performed at video mixing unit 71. Moreover, a line for directly fetching a signal from TV tuner unit 42 or from A/V input unit 41 is also connected to the video mixing unit 71. Frame memory 72 used as a buffer is connected to video mixing unit 71. When the output of video mixing unit 71 is a digital output, it is output to the exterior through interface (I/F) 73, and, in the case of an analog output, it is output to an external apparatus (for example, monitor TV 75) through a digital/analog converter 74.

The output audio signal from decoder unit 60 is converted into an analog via selector 76 and by digital/analog converter 77, and the converted analog signal is then output to an exterior. Selector 76 is controlled by a selection signal from microcomputer block 30. Thereby, when carrying out the direct monitoring of a digital signal from TV tuner unit 42 or A/V input unit 41, selector 76 can directly select the signal passing through encoder unit 50.

Incidentally, in formatter 51 of encoder unit 50, each segmenting information (information at the time of GOP head interruption, etc.) is created during recording. The created segmenting information is periodically sent to the MPU of microcomputer block 30. As this segmenting information, there are the number of packs of VOBU (data unit), the end address of an I-picture from the head of VOBU, reproduction time of VOBU, etc.

Simultaneously, information from the aspect information processing section is sent to the MPU at the time of start of the recording. Then, the MPU creates VOB stream information (STI). Here, resolution data, aspect data, etc. are saved at the STI. At the time of reproduction, each of the decoder units is subjected to initial setting based on the information of the STI.

Moreover, in a recordable/reproducible DVD, one disc is assigned with one video file. Moreover, in order to continue reproduction without being disrupted while accessing (seeking) data, an information unit (size) which continues at worst is determined. This information unit is called a CDA (Contiguous data area). The CDA size is the multiple of an ECC (error correction code) block (16 sector or 32 K bytes). With the file system, recording is performed in unit of the CDA.

Data-processor unit 1003 receives the data in unit of the VOBU from the formatter of encoder unit 50, and supplies disc drive unit 1002 with the data in unit of the CDA.

Moreover, the MPU of microcomputer block 30 creates management information required to reproduce the recorded data. And the MPU sends the created management information to data-processing section 1003, when a command of data recording termination is recognized. Thereby, the management information is recorded on a disc. Therefore, when encoding is performed, the MPU of microcomputer block 30 receives information (segmenting information etc.) in unit of the data from encoder unit 50. Moreover, at the time of recording, this MPU recognizes the management information (file system) read from the optical disc and the hard disk, recognizes the non-recorded area of each disc, and sets the data recorded area at the disc through data-processor unit 1003.

The above system can also perform the hard disk recording. Therefore, when a cartridge-less type DVD-RAM disc is loaded in the apparatus as explained with reference to FIG. 2, and if a recording instruction is generated, no recording is performed on the DVD-RAM disc but recording on the hard disk can be performed. As a result, when timer reservation recording is to be performed, even if a cartridge-less DVD-RAM disc (which may have a scratch and/or dirt) is erroneously loaded, a failure of the reservation recording can be avoided.

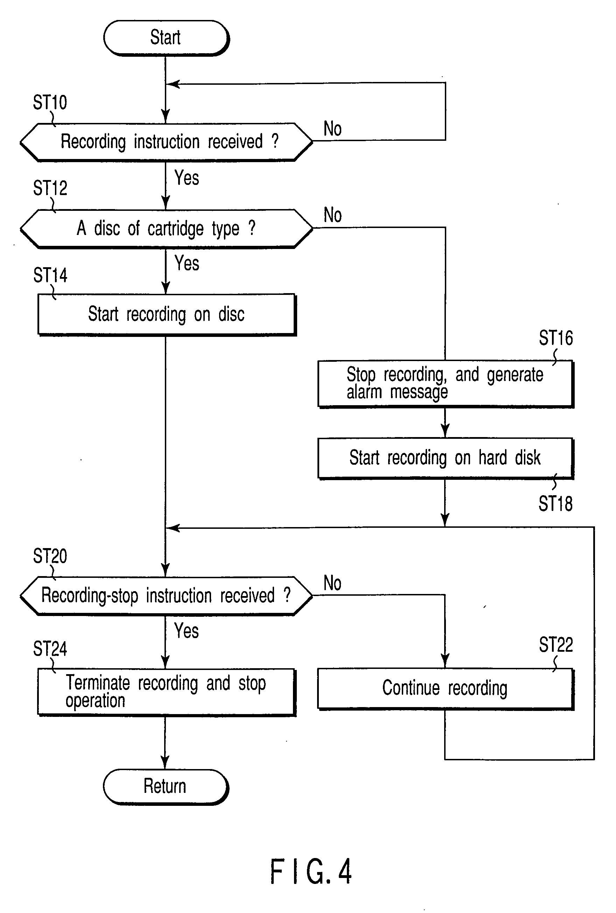

FIG. 4 is a flow chart showing a characteristic operation of the above-mentioned system. Whether the disc carried in tray 101 of FIG. 1 or FIG. 2 is a cartridge type is detected when tray 101 is inserted in the apparatus main body.

When a recording instruction is given by the key operation of a user, or is given by a timer reservation program (step ST10 yes), operation according to the disc type distinction result will be performed (step ST12). Recording on the disc is started (step ST14) if the disc is the cartridge type (step ST12 yes). While there is no recording end instruction (no at step ST20), the recording is continued (step ST22). When the recording end instruction is given (yes at step ST20), the recording is completed and the apparatus operation is stopped (step ST24).

On the other hand, when the recording instruction is generated (yes at step ST10), if a bare disc is loaded, or if the loaded disc is not a cartridge type (no at step ST12), the recording on the disc is inhibited, and a warning message is displayed (step ST16). In this case, the recording is started on other available recording medium, e.g., hard disc 2001 (step ST18). This hard disk recording is continued until the recording end instruction is generated (processing loop of no at step ST20 and step ST22).

According to an apparatus of the embodiment, when the recording is performed on the hard disk as mentioned above, even at the time of end of the recording, it is possible to report, at the display unit (such as TV 75 in FIG. 3), that which medium has been used for the recording (the processing of this report display is not shown). The reason for carrying out this report is as follows. That is, when a user sets up, for example, timer reservation recording, it is to prevent a user's misunderstanding that the recording has been failed (even if no recording has been made on the disc, the recording on the hard disk has successfully been done).

When the timer reservation recording has been made on the hard disk as mentioned above, the user can load a new cartridge type disc (DVD-RAM disc) on tray 101, and can copy a desired program, having already been recorded on the hard disk, to the DVD-RAM disc. Or, the desired program having already been recorded on the hard disk can be copied to a brand-new DVD-R or a brand-new DVD-RW.

In the hard disk recording at step ST18, when there is no free space in HDD unit 2001, the recording end instruction is generated immediately (yes at step ST20), so that the recording operation stops (step ST24).

FIG. 5 is a flow chart explaining other examples of operation of the above-mentioned system. The processing of FIG. 4 assumes a single deck type apparatus wherein hard disk 2001 and one set of disc drive 1002 are provided. On the other hand, the processing of FIG. 5 assumes a double deck type apparatus wherein hard disk 2001 and two sets (drive 1 and drive 2) of disc drives 1002 are provided. Moreover, the processing of FIG. 5 enables to perform compulsory recording on bare discs (such as new DVD-R without a crack and/or dirt or the like).

If a recording instruction is generated by the key operation of a user, or by a timer reservation program (yes at step ST30), it is checked "whether to force the recording on the bare disc currently loaded in the drive 1" (step ST31). When the user has preset the forcible recording (yes at step ST31), the recording on disc 1001 (here the disc type is not asked) is started (step ST34).

When the user has not preset the forcible recording (no at step ST31), it is checked whether the disc loaded in the drive 1 is a cartridge type (step ST32). If it is a cartridge type (yes at step ST32), the recording on disc 1001 is started (step ST34). If the disc in drive 1 is not a cartridge type (no at step ST32), it is checked whether another disc is loaded in the drive 2 (step ST35).

If there is no disc in the drive 2 (no at step ST35), no recording is performed in any of the drive 1 and drive 2, and the warning message of a purport "the recording to a disc has not been made" is generated (step ST36). And the recording on hard disk 2001 is started (step ST38).

If a disc is loaded in the drive 2 (yes at step ST35), it is checked whether that disc is a cartridge type (step ST42). If it is a cartridge type (yes at step ST42), the recording on that disc is started (step ST44).

As mentioned above, the recording is started on hard disk 2001 or on optical disc 1001 (i.e., the disc loaded in the drive 1 and/or the drive 2). This recording is continued until a recording stop instruction is generated by the key operation of a user, or is generated by a timer reservation program (processing loop of no at step ST50 and step ST22). If the recording stop instruction is generated (yes at step ST50), the recording is completed and the apparatus operation is stopped (step ST54).

Incidentally, in the hard disk recording at step ST38, when there is no free space in HDD unit 2001, a recording end instruction is generated immediately (yes at step ST50), and the recording operation stops (step ST54).

As explained above, according to an embodiment of the present invention, it is possible to totally improve a reliability of the apparatus, by implementing a safeguard function for inhibiting information recording on a cartridge-less type optical disc.

Incidentally, the optical disc drive (such as a DVD-RAM drive) used for an embodiment of the present invention may be not only one drive per apparatus but also two or more drives per apparatus. Further, the disc drive used for the embodiment may be an autochanger by which two or more optical discs can be handled.

## Claims

1. An information recording apparatus **characterized by** comprising:
recording medium type detecting means (401) for detecting whether a disc to be used as a recording medium is a bare disc (200) or a cartridge-contained disc (300); and
recording operation inhibiting means (402) for inhibiting a recording operation on the bare disc (200) if said recording medium type detecting means (401) detects that the recording medium to be used is the bare disc (200).

2. The apparatus of claim 1, **characterized in that** said apparatus comprises a loading unit (101) and a main body (100) configured to freely receive or eject the loading unit (101),
that said recording medium type detecting means (401) is configured to detect whether the disc on the loading unit (101) is the bare disc (200) or the cartridge-contained disc (300) when the loading unit (101) is received by the main body (100), and
that said recording operation inhibiting means (402) is configured to inhibit the recording operation when said recording medium type detecting means (401) detects that the disc in the loading unit (101) is the bare disc (200).

3. The apparatus of claim 1 or 2, **characterized in that** when said recording operation inhibiting means (402) inhibits the recording operation (no at step ST12 or ST32), recording is performed (step ST18 or ST38) on another recording medium (2001) while the bare disc (200) is in the loading unit (101).

4. The apparatus of any one of claims 1 to 3, **characterized in that** when said recording operation inhibiting means (402) inhibits the recording operation (no at step ST12 or ST32), a display indicating that an unrecordable disc is loaded is performed (step ST16 or ST36).

5. The apparatus of any one of claims 1 to 4, **characterized in that** when said recording operation inhibiting means (402) inhibits the recording operation (no at step ST12 or ST32), the loading unit (101) or the disc (200) in the loading unit (101) is ejected (along with step ST16 or ST36) from the main body (100).

6. An information recording method, **characterized by** comprising the steps of:
detecting (step ST12, ST32) which of a bare disc (200) and a cartridge-contained disc (300) is used for a recording medium; and
when it is detected that the recording medium is the bare disc (no at step ST12 or ST32), skipping the recording operation (step ST14 or ST34) on the bare disc (200).

7. The method of claim 6, **characterized in that** when the recording operation on the bare disc (200) is skipped (no at step ST12 or ST32), the recording operation is performed (step ST18 or ST38) on a recordable medium (e.g., 2001) other than the bare disc (200).
